# EUROPÄISCHE PATENTSCHRIFT

(11) **EP 0 690 539 B1**
(45) Veröffentlichungstag und Bekanntmachung des Hinweises auf die Patenterteilung: **07.07.1999**
(21) Anmeldenummer: 95105067.3
(22) Anmeldetag: 05.04.1995
(51) Int. Cl.: H02H 9/06

(54) **Schutzschaltung für Telekommunikationsanlagen**
Protection circuit for telecommunication equipment
Circuit pour la protection des installations de télécommunication

(30) Priorität: 01.07.1994 DE 4423798
(43) Veröffentlichungstag der Anmeldung: 03.01.1996
(73) Patentinhaber: KRONE Aktiengesellschaft, 14167 Berlin (DE)
(72) Erfinder: Storbeck, Carsten, Dipl.-Ing., D-12203 Berlin (DE)

(56) Entgegenhaltungen:
- EP-A- 0 471 167
- GB-A- 2 160 721
- US-A- 4 758 920

## Beschreibung

Die Erfindung bezieht sich auf eine Schutzschaltung zum Schutz insbesondere von Telekommunikationsanlagen vor Überspannung und Überstrom gemäß Anspruch 1.

Liegt zwischen einer Fernsprech- oder Datenleitung und einer Energieversorgungsleitung, z.B. 220 V-Netz, ein Kurzschluß vor, so kommt es nach dem Ansprechen eines Überspannungsableiters mit einer Ansprechgleichspannung von +- 230 V innerhalb von Sekunden zu einem Ansprechen des Fail-Safe-Kontaktes und einem daraus resultierenden Kurzschließen des Überspannungsableiters (Power Crossing). Der jetzt fließende Kurzschlußstrom wird permanent gegen Erde abgeleitet. Da die anliegende Störung damit jedoch nicht beseitigt ist, sondern noch eine Zeitlang anliegen kann, besteht die Forderung, diese zum Teil unzulässig hohen Dauerströme, die zu einer Zerstörung der entsprechenden Leitungskabel führen können, zu trennen. Im allgemeinen werden dazu Liniensicherungen vorgesehen, die nach den bekannten Schaltungen (Krone Firmenprospekt "ComProtect 2/1 CP DX 180A1", 8/1993) vor dem Überspannungsableiter angeordnet sind, um den Kurzschlußstrom zu trennen.

Da die wichtigste Funktion von Überspannungsableitern jedoch das wiederholte Ableiten von Stoßströmen in der Größenordnung von 5 kA darstellt und die beschriebene Liniensicherung bisher vor dem Überspannungsableiter angeordnet wurde, konnte diese Anforderung nur durch sehr teure Spezialsicherungen beherrscht werden. Geeignete Spezialsicherungen werden z.B. in dem Sicherungs-Hauptkatalog der Firma Cehess, 94533 Rungis Cedex (Frankreich), beschrieben. Diese Sicherungen sind als stoßstromfeste Liniensicherungen einsetzbar. Nachteilig ist hier das Alterungsverhalten der Sicherungen. Bei den entsprechenden Stoßstrombelastungen ist die Lebensdauer der Sicherungen entsprechend eingeschränkt. Die Sicherung ist außerdem nicht reversibel.

In der DE 40 26 004 C2 (= EP 471 167 A1) ist eine Schutzschaltung für Telekommunikationsanlagen beschrieben, bei welcher der Querpfad des Überspannungsableiters vor der Sicherung angeordnet ist, während zwischen der Leitungsverbindung und dem Erdleiter ein Kurzschluß-Querpfad hinter der Sicherung angeordnet ist. Wenn das Schutzelement anspricht, dann öffnet der Querpfad des Überspannungsableiters und schließt den Kurzschluß-Querpfad (Fail-Safe), so daß die Sicherungen ansprechen und die Leitungen aufgetrennt werden. Durch diese Maßnahme können handelsübliche Sicherungen als Liniensicherung eingesetzt werden, da deren besondere Lage keine Stoßstromfestigkeit mehr erfordert.

Nachteilig ist es jedoch, daß nach dem Ansprechen der Liniensicherung der gesamte Stecker ausgetauscht werden muß.

Der Erfindung liegt von daher die Aufgabe zugrunde, ein Verfahren sowie eine Schaltung insbesondere zum Schutz von Telekommunikationsanlagen vor Überspannung und Überstrom zu entwickeln, welches eine stoßstromfeste und reversible Liniensicherung gewährleistet.

Die Lösung der Aufgabe ergibt sich aus den Merkmalen des Anspruchs 1.

Durch die Abstimmung der Ansprechgleichspannung des Überspannungsableiters bezüglich der PTC-Widerstände und der bidirektionalen Thyristordioden (Thyristordioden sind "Crowbar type protection diode", Halbleiterbauelemente mit zwei Leitungszuständen ähnlich den Thyristoren oder den Triac's, z.B. die TRISIL-Dioden von SGS-Thomson Microelectronics in "PROTECTION DEVICES", Databook, 2nd Edition, March 1993,S.311) derart, daß die Ansprechspannung oberhalb des Spitzenwertes einer Wechselspannungsbelastung von z.B. 230 Veff, das sind Spitzenwerte von >=325 V, liegt und daß die Ansprechspannung der Thyristordioden knapp über den maximalen Betriebsspannungswerten, die üblicherweise in der Telekommunikation auftreten, z.B. 180 V, liegt, sowie durch die Wahl der PTC-Widerstände als Entkopplungsglied, werden beliebige Stoßstromfestigkeiten und eine reversible Funktion für eine Liniensicherung erreicht.

Die Funktionen von Liniensicherungen und Gerätesicherungen werden dabei von einem Bauelement, nämlich von Standard-PTC-Widerständen übernommen. Eine beliebige Anzahl von Stoßstrombelastungen bewirkt keine Alterung. Nach einem Abklingen der Störung ist die Schaltung sofort wieder einsetzbar. Gleichzeitig gewährleistet die Schutzschaltung, daß sie in bestehende Bauformen von Schutzschaltern integriert werden kann, daß sie kostengünstig über Standardbauelemente realisierbar ist und weitere Funktionen eines Schutzsteckers nicht einschränkt.

Die Schutzschaltung benötigt zum Schutz vor unzulässig hoher Wärmeentwicklung des Überspannungsableiters keinen Fail-Safe-Kontakt, der bisher notwendig war und dazu führte, daß nach seiner Auslösung der gesamte Schutzstecker ausgetauscht werden mußte. Die erfindungsgemäße Schutzschaltung hingegen schützt ohne Fail-Safe-Kontakt hinsichtlich beliebig lang anliegender Wechselspannungsbelastungen von 230 Veff, reversibel und völlig wartungsfrei.

Die Verwendung von Thyristordioden als zweite Stufe von spannungsbegrenzenden Bauelementen (Feinschutz), insbesondere von Solid-State-Thyristordioden, garantiert ein extrem schnelles Ansprechen, einen niedrigen Schutzpegel bei statischen und dynamischen Spannungsanstiegen und vereint somit die Vorteile von Überspannungsableiter (Grobschutz) und Solid-State-Bauelementen in einer Schutzschaltung. Der Einsatz der PTC-Widerstände gewährleistet zusätzlich einen reversiblen Stromschutz auch bei Spannungen, die weder den Überspannungsableiter noch die Dioden zum Ansprechen bringen (Funktion Gerätesicherung). Somit werden mit einem Bauelement zwei Sicherungsfunktionen erfüllt, Linien- und Gerätesicherung.

Weitere vorteilhafte Ausgestaltungen der Erfindung ergeben sich aus den Unteransprüchen.

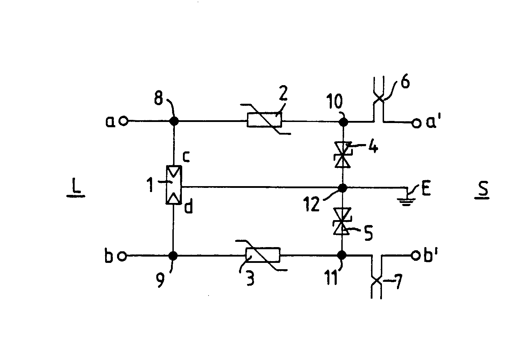

Die Erfindung ist nachfolgend anhand eines in den Zeichnungen dargestellten Ausführungsbeispieles näher erläutert. Die einzige Figur 1 zeigt das System-Schaltbild einer erfindungsgemäßen Schutzschaltung.

In der Figur 1 ist eine Schutzschaltung gezeigt, die in die Strompfade a-a' und b-b' geschaltet ist, wobei eine gemeinsame Erdleitung E zur Ableitung von Überströmen, hervorgerufen durch Überspannungen, bezogen auf das Erdpotential, dient. Auf der Netz- bzw. Linienseite L, von der aus Störungen auftreten können, ist zwischen den Strompfaden a-a' und b-b' als Querpfad c-d an den Abzweigen 8,9 ein Überspannungsableiter 1, beispielsweise mit einer Ansprechgleichspannung von 440-660 V, angeordnet, an den die gemeinsame Erdleitung E angeschlossen ist. Die PTC-Widerstände 2,3 sind nach den Abzweigen 8,9 des Überspannungsableiters 1 in die Linien a-a' bzw. b-b' geschaltet. Hinter den PTC-Widerständen 2,3, die beispielsweise 20 Ohm betragen, sind von den Abzweigen 10,11 als weiterer Querpfad, parallel zum Überspannungsableiter 1, Solid-State-Thyristordioden 4,5 mit einer Ansprechspannung von z.B. 200 V, geschaltet, die über den Abzweig 12 mit der gemeinsamen Erdleitung E verbunden sind. Auf der zu schützenden Seite bzw. Systemseite S sind in die Linien a-a' bzw. b-b' Meß- und Trennstellen 6,7 angeordnet. Die Anordnung von Meß- und Trennstellen 6,7 hinter der Schutzschaltung, die einen Staffelschutz aus Grob-, Fein- und Stromschutz bildet, erlaubt eine teilweise Funktionsprüfung der Linie.

Die Bauelemente der Schutzschaltung müssen zur Gewährleistung der Funktion der PTC-Widerstände 2,3 als stoßstromfeste und reversible Liniensicherung aufeinander abgestimmt sein. Die Ansprechspannung des Überspannungsableiters 1, es kann ein 3-Pol-Ableiter eingesetzt sein, muß z.B. so ausgewählt werden, daß sie oberhalb des Spitzenwertes einer Wechselspannungsbelastung von 230 Veff liegt. Es wurde hier ein Überspannungsableiter 1 mit einer Ansprechgleichspannung > 440 V ausgewählt.

Die Thyristordioden 4,5 sind so auszuwählen, daß ihre Ansprechspannung knapp über den maximalen Betriebsspannungswerten liegt, die in der Fernmeldetechnik üblicherweise auftreten, z.B. 180 V.

Die PTC-Widerstände 2,3 werden so ausgewählt, daß sie als Entkopplungsglied wirken und eine maximale Wechselspannung von z.B. 240 Veff sperren können. Der maximale Schaltstrom für die PTC-Widerstände 2,3 ist so hoch wie möglich zu wählen.

Im Falle einer transienten Spannungsbelastung begrenzen die Thyristordioden 4,5 am Ausgang a'-b' der Systemseite S die auftretende Überspannung extrem schnell auf einen Schutzpegel von z.B. +- 250 V. Innerhalb kürzester Zeit übernimmt durch die Entkopplung über die PTC-Widerstände 2,3 der Überspannungsableiter 1 die restliche Störenergie und leitet diese über die Erdleitung E ab. Die temperaturabhängigen PTC-Widerstände 2,3 im Längszweig a-a' bzw. b-b' übernehmen zum einen über ihren ohmschen Widerstand die Entkopplung zwischen Grob- und Feinschutz und wirken zum anderen als reversibles strombegrenzendes Bauelement. Wenn die Eigenschaft "reversibel" nicht von Bedeutung ist, dann können anstelle von PTC-Widerständen auch "normale" Sicherungen eingesetzt werden. Stoßströme in der Größenordnung von z.B. 5 kA werden ausschließlich vom Überspannungsableiter 1 übernommen und über die Erdleitung E abgeleitet.

Wenn allerdings eine Wechselspannungsbelastung mit z.B. 230 Veff/ 5 Aeff auftritt, dann erreicht die Spannung nicht den Wert der Ansprechgleichspannung des Überspannungsableiters 1. In diesem Falle entfällt der Überspannungsableiter 1 quasi als Bauelement für sämtliche Wechselspannungsbelastungen mit 230 Veff. Die für diese Spannungsbelastung wesentlich besser geeigneten Thyristordioden 4,5 übernehmen die Belastung und begrenzen die Spannung. Durch die wesentlich niedrigere Durchlaßspannung von Thyristordioden, allgemein von 2-3 V, ist der Leistungsumsatz und damit die Wärmeentwicklung deutlich geringer als bei Überspannungsableitern. Bei Wechselspannungsbelastungen bis zu 230 Veff kann somit auch kein Ansprechen des Fail-Safe-Kontaktes des Überspannungsableiters 1 mehr erfolgen. Bei allen Wechselspannungsbelastungen bis zu 230 Veff ist demzufolge keine Anordnung eines Fail-Safe-Kontaktes am Überspannungsableiter 1 vorzusehen. Folglich braucht der Schutzstecker nach einer 230 Veff Wechselspannungsbelastung auch nicht mehr ausgetauscht zu werden. Eine unzulässig hohe Wärmeentwicklung an den Thyristordioden 4,5 wird durch die geeignete Wahl der PTC-Widerstände 2,3 ausgeschlossen.

Die Lage der PTC-Widerstände 2,3 vor dem jeweiligen spannungsbegrenzenden Bauelement, hier die Thyristordiode 4,5, bringt es mit sich, daß die PTC-Widerstände 2,3 die Funktionen von reversiblen und stoßstromfesten Liniensicherungen übernehmen. Je nach gewähltem Schaltstrom der PTC-Widerstände 2,3 werden die Kurzschlußströme, die bei jeder Halbwelle durch die Thyristordioden 4,5 fließen, nach einer Charakteristik t=f(i) unterbrochen. Die PTC-Widerstände 2,3 werden hochohmig und unterbinden somit den unzulässig hohen Kurzschlußstrom, der über die Fernmeldekabel und die Thyristordioden 4,5 über die Erdleitung E abfließen würde.

Nach einem Abklingen der Störung ist die Schaltung sofort wieder einsatzbereit.

Insgesamt ergibt sich durch die erfindungsgemäße Zusammenschaltung des Überspannungsableiters 1 mit den Solid-State-Thyristordioden 4,5 und durch die erfindungsgemäße Abstimmung der Nennansprechgleichspannung des Überspannungsableiters 1 mit den Parametern der übrigen Bauelemente, daß
- die Vorteile von Überspannungsableitern und Solid-State-Thyristordioden in einem Schutzstecker vereint sind,
- die Funktion von Liniensicherungen und Gerätesicherungen von einem Bauelement, den Standard-PTC-Widerständen 2,3, erfüllt wird,
- die 5 kA-Stoßstromfestigkeit durch den Überspannungsableiter 1 erreicht wird,
- ein reversibler Stromschutz durch die PTC-Widerstände 2,3 auch bei Spannungen, die weder den Überspannungsableiter 1 noch die Dioden 4,5 zum Ansprechen bringen, gewährleistet ist,
- als stoßstromfeste und reversible Liniensicherung der gleiche Standard-PTC-Widerstand 2,3 verwendet wird,
- bei einem Kurzschluß einer Fernmeldeleitung mit einer Energieversorgungsleitung mit 230 Veff der Fail-Safe-Kontakt des Überspannungsableiters 1 nicht mehr anspricht,
- ein reversibles und weitgehend wartungsfreies Schutzkonzept erreicht ist,
- der Einsatz der Schutzschaltung auch in bekannten Schutzsteckergehäusen erfolgen kann.

## Patentansprüche

1. Schutzschaltung zum Schutz, insbesondere von Telekommunikationsanlagen, vor Überspannung und Überstrom von transienten und permanenten Störungen, die eine thermische Belastung der Bauelemente und des Fernmeldekabels bewirken, mit einem zwischen den Strompfaden (a-a' und b-b') als Querpfad (c-d) an Abzweigen (8,9) angeordneten Überspannungsableiter (1), mit nach den Abzweigen (8,9) des Überspannungsableiter (1) in die Linien (a-a' und b-b') geschalteten PTC-Widerständen (2,3) und mit parallel zum Überspannungsableiter (1) an Abzweigen (10,11) als weiterer Querpfad hinter den PTC-Widerständen (2,3) spannungsbegrenzenden Thyristordioden (4,5), und in der für den Fall einer permanenten Störung bei einem Kurzschluß zwischen einer Fernsprechleitung- oder Datenleitung und einer Energieversorgungsleitung, für den Überspannungsableiter (1) eine Ansprechspannung zwischen 440 bis 660 V oberhalb des Spitzenwerts einer Energieversorgungsspannung und für die Thyristordioden (4,5) eine Ansprechspannung zwischen 180 bis 250 V geringfügig über den maximalen Betriebsspannungswerten der zu schützenden Linie gewählt wird und die PTC-Widerstände (2,3) als reversible Liniensicherung und reversibler Fail-Safe-Schalter eingesetzt werden, die die maximalen Spannungs- und Stromamplituden der Energieversorgungsspannung sperren.

2. Schutzschaltung nach Anspruch 1, dadurch gekennzeichnet, daß die spannungsbegrenzenden Bauelemente (4,5) Solid-State-Thyristordioden sind.

3. Schutzschaltung nach Anspruch 1, dadurch gekennzeichnet, daß ein Feinschutz (4,5) zur Erzielung eines Stufenschutzes aus Grobschutz (1) und Feinschutz (4,5) in die Linie geschaltet ist und daß dem Stufenschutz in jeder Linie eine Meß- und Trennstelle (6,7) nachgeordnet ist.

## Claims

1. Protection circuit for protection, in particular of telecommunication installations, against overvoltage and overcurrent of instances of transient and permanent interference, which effect thermal loading of the components and of the telecommunication cable, having an overvoltage arrester (1) arranged between the current paths (a-a' and b-b') as a shunt path (c-d) at branch points (8, 9), having PTC thermistors (2, 3) connected into the lines (a-a' and b-b') downstream of the branch points (8,9) of the overvoltage arrester (1), and having voltage-limiting thyristor diodes (4, 5) in parallel with the overvoltage arrester (1) at branch points (10,11) as a further shunt path downstream of the PTC thermistors (2, 3), and in which, for the case of permanent interference in the event of a short circuit between a telephone line or data line and a power supply line, a response voltage of between 440 to 660 V, above the peak value of a power supply voltage, is selected for the overvoltage arrester (1) and a response voltage of between 180 to 250 V, slightly above the maximum operating voltage values of the line to be protected, is selected for the thyristor diodes (4, 5), and the PTC thermistors (2, 3) are used as reversible line protection device and reversible fail-safe switch, which block the maximum voltage and current amplitudes of the power supply voltage.

2. Protection circuit according to Claim 1, characterized in that the voltage-limiting components (4, 5) are solid-state thyristor diodes.

3. Protection circuit according to Claim 1, characterized in that a fine-protection device (4, 5) is connected into the line for the purpose of obtaining a stage protection comprising coarse-protection device (1) and fine-protection device (4, 5), and in that a measurement and disconnection point (6, 7) is arranged downstream of the stage protection in each line.

## Revendications

1. Circuit protecteur pour la protection, en particulier d'installations de télécommunication, contre la surtension et la surintensité de courant de perturbations transitoires et permanentes qui produisent une charge thermique des éléments constituants et du câble de télécommunication, avec un parasurtension (1) agencé entre les trajets du courant (a-a'et b-b') comme trajet transversal (c-d) aux dérivations (8,9), avec des résistances à coefficient positif de température (2,3) connectées après les dérivations (8,9) du parasurtension (1) dans les lignes (a-a' et b-b') et avec des thyristors montés en diode (4,5) limitant la tension parallèlement au parasurtension (1) aux dérivations (10,11) comme autre trajet transversal derrière les résistances à coefficient positif de température (2,3), et dans lequel, en cas de perturbation permanente lors d'un court-circuit entre une ligne de télécommunication ou une ligne de données et une ligne d'alimentation en énergie, on choisit pour le parasurtension (1) une tension d'amorçage dans l'intervalle de 440 à 660 V supérieure à la valeur de crête d'une tension d'alimentation en énergie, et, pour les thyristors montés en diode (4,5), une tension d'amorçage dans l'intervalle de 180 à 250 V légèrement au-dessus des valeurs de tension de fonctionnement maximales de la ligne à protéger, et on met en oeuvre les résistances à coefficient positif de température (2,3) comme fusible de ligne réversible et commutateur à sûreté intégrée réversible, qui bloquent les amplitudes maximales de tension et de courant de la tension d'alimentation en énergie.

2. Circuit protecteur suivant la revendication 1, caractérisé en ce que les éléments constituants limitant la tension (4,5) sont des thyristors montés en diode à l'état solide.

3. Circuit protecteur suivant la revendication 1, caractérisé en ce qu'un fin dispositif de protection (4,5) est connecté dans la ligne pour réaliser un dispositif de protection en série constitué d'un dispositif de protection grossier (1) et d'un dispositif de protection fin (4,5), et en ce que dans chaque ligne un point de mesure et séparateur (6,7) soit connecté en aval au dispositif de protection en série.
